(19) Europäisches Patentamt
European Patent Office
Office européen des brevets

(11) Veröffentlichungsnummer : **0 466 680 A1**

(12) **EUROPÄISCHE PATENTANMELDUNG**

(21) Anmeldenummer : **91890140.6**

(22) Anmeldetag : **04.07.91**

(51) Int. Cl.$^5$ : **C08G 73/10,** C08J 9/02,
// (C08J9/02, C08L79:08)

(30) Priorität : **12.07.90 AT 1485/90**

(43) Veröffentlichungstag der Anmeldung :
**15.01.92 Patentblatt 92/03**

(84) Benannte Vertragsstaaten :
**BE DE DK ES FR GB IT NL**

(71) Anmelder : **Lenzing Aktiengesellschaft**
**A-4860 Lenzing (AT)**

(72) Erfinder : **Loy, Walter, Dipl.-Ing.**
**Welfenstrasse 8**
**A-4810 Gmunden (AT)**
Erfinder : **Weinrotter, Klaus, Dipl.-Ing. Dr.**
**Stadtplatz 36**
**A-4840 Vöcklabruck (AT)**

(74) Vertreter : **Wolfram, Gustav, Dipl.-Ing.**
**Schwindgasse 7 P.O. Box 205**
**A-1041 Wien (AT)**

(54) **Schwerentflammbarer, hochtemperaturbeständiger Schaumstoff auf Polyimiden.**

(57) Die Erfindung betrifft einen schwerentflammbaren, hochtemperaturbeständigen Schaumstoff aus Polyimiden der allgemeinen Formel

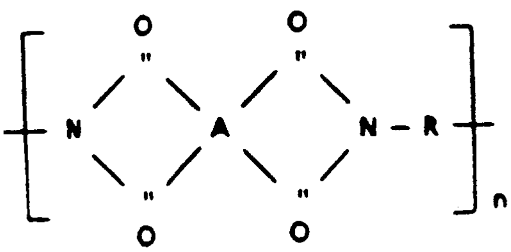

, (I)

Der Schaumstoff besitzt eine erhöhte Thermostabilität und weist einen bei einer thermogravimetrischen Analyse mit einer Aufheizgeschwindigkeit von 20 Grad pro Minute feststellbaren maximalen Gewichtsverlust zwischen 550 und 650 °C, insbesondere zwischen 590 und 650 °C, auf, wobei der Gewichtsverlust bis zu einer Aufheiztemperatur von 350 °C insgesamt weniger als 3 % Masse beträgt.

EP 0 466 680 A1

Jouve, 18, rue Saint-Denis, 75001 PARIS

Die Erfindung betrifft einen schwerentflammbaren, hochtemperaturbeständigen Schaumstoff aus Polyimiden, sowie ein Verfahren zu seiner Herstellung.

Der Anwendungsbereich von Polyimidschäumen ist äußerst vielseitig. Sie werden beispielsweise zur thermischen und akustischen Isolierung von Schiffs-, U-Boot- und Flugzeugrümpfen, als Rohrleitungsummantelung, zur Auskleidung von Lüftungskanälen und zur Schockabsorption von Lufttransportbehältern verwendet. Polyimidschäume werden auch zur Isolierung von Gebäuden verwendet.

Ein allgemeines Verfahren zur Herstellung von Schaumstoffen aus aromatischen Polyimiden ist aus der US-PS 3,300,420 bekannt. Nach diesem Verfahren wird bei erhöhter Temperatur in flüssiger Phase ein organisches Polyisocyanat mit einem aromatischen Carbonsäureanhydrid, gegebenenfalls unter Katalyse, umgesetzt. Das Anhydrid muß noch mindestens einen zusätzlichen Substituenten besitzen, der mit dem Isocyanat reagieren kann, wobei dieser Substituent auch eine weitere Anhydridgruppe sein kann. Die Reaktion ist durch das entstehende Kohlendioxid selbstschäumend. Sie wird durchgeführt, indem die Reaktionspartner zuerst vorpolymerisiert werden, wonach das Reaktionsgemisch unter Rühren einige Zeit auf einer Temperatur zwischen 150 und 370°C gehalten wird. Gemäß der US-PS 3,300,420 soll sich eine Vielzahl von aromatischen Polycarbonsäureanhydriden und aromatischen Polyisocyanaten zur Herstellung hochtemperaturbeständiger Schaumstoffe eignen.

Ein Nachteil der beschriebenen Polyimidschaumstoffe ist in ihrer relativ geringen Thermostabilität zu sehen. Gemäß der US-PS 3,300,420 ist sie nur bis zu einer Temperatur von 260°C gegeben, was den Einsatzbereich beschränkt.

Die Erfindung stellt sich die Aufgabe, diesen Nachteil zu beseitigen und dementsprechend einen Polyimidschaumstoff zur Verfügung zu stellen, welcher eine größere Thermostabilität besitzt.

Der erfindungsgemäße schwerentflammbare, hochtemperaturbeständige Polyimidschaumstoff besitzt die allgemeine Formel

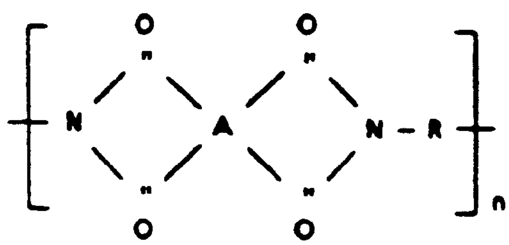

, (I)

worin n eine ganze Zahl größer als 1,
A eine vierbindige Gruppe der Formel

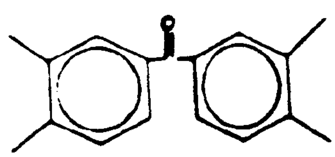

, (IIa) oder

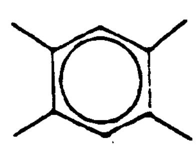

, (IIb) und

R mindestens eine der folgenden zweibindigen Gruppen der Formeln

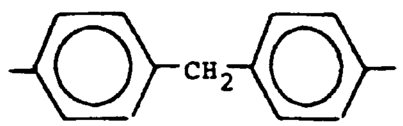 , (III), 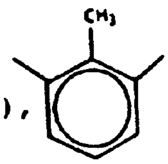 , (IVa), 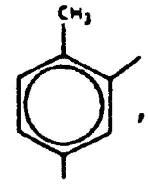 , (IVb),

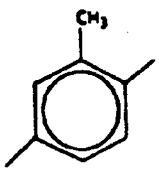 , (IVc), 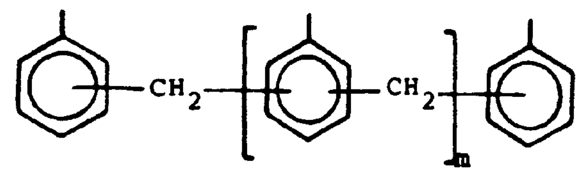 , (V),

worin m die Zahl 0, 1, 2, 3 oder 4 bedeutet, darstellen und welcher Polyimidschaumstoff einen bei einer thermogravimetrischen Analyse mit einer Aufheizgeschwindigkeit von 20 Grad pro Minute feststellbaren maximalen Gewichtsverlust zwischen 550 und 650°C, insbesondere zwischen 580 und 650°C, aufweist, wobei ein Gewichtsverlust bis zu einer Aufheiztemperatur von 350°C insgesamt weniger als 3 % Masse beträgt. Der erfindungsgemäße Polyimidschaum ist dementsprechend bis zu einer Temperatur von 370°C als thermostabil anzusehen.

Der erfindungsgemäße Schaumstoff aus Polyimid kann durch Umsetzen von Benzophenon-3,3',4,4'-tetracarbonsäuredianhydrid (BTDA) oder Pyromellithsäuredianhydrid mit mindestens einem Di- oder Polyisocyanat, ausgewählt aus der Gruppe Methylendiphenyl-4,4'-diisocyanat, 2,4-,2,5-,2,6-Toluylendiisocyanat oder Polymethylenpolyphenylenpolyisocyanat der Formel

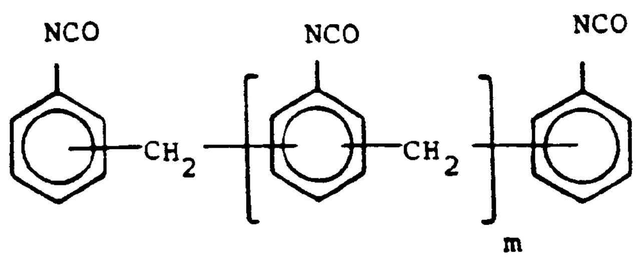 , (Va)

in Gegenwart eines Reaktionsbeschleunigers hergestellt werden, wobei das Tetracarbonsäuredianhydrid, das Di- oder Polyisocyanat und der Reaktionsbeschleuniger bei Raumtemperatur homogen vermischt, die Mischung auf eine Temperatur zwischen 200 und 250°C erhitzt und mindestens 5 Minuten in diesem Temperaturbereich gehalten wird. Das erfindungsgemäße Verfahren wird ohne Lösungsmittel durchgeführt.

Es hat sich gezeigt, daß eine Reaktionsführung bei Temperaturen über 250°C zu unerwünschten Nebenreaktionen führt. So entstehen insbesondere durch Reaktion von Isocyanatgruppen untereinander Carbodiimide, die die Eigenschaften des Polyimidschaumstoffes nachteilig beeinflussen. Verunreinigungen durch Carbodiimide führen u.a. zu einer Abnahme der Thermostabilität und der Elastizität.

Als Reaktionsbeschleuniger kann ein Gemisch aus tertiären Aminen, vorzugsweise Triäthylendiamin und Dimethyläthanolamin, am besten in einer Menge zwischen 0,1 und 5% Masse, bezogen auf das Tetracarbonsäuredianhydrid, eingesetzt werden.

Eine vorteilhafte Ausführungsform des erfindungsgemäßen Verfahrens besteht darin, daß es in Gegenwart eines oberflächenaktiven Stoffes, vorzugsweise auf Silikonbasis, durchgeführt wird. Die Anwesenheit derartiger Stoffe führt zur Bildung kleinerer, regelmäßig ausgebildeter Poren und damit zu einem Schaumstoff höherer Dichte.

Gemäß einer weiteren vorteilhaften Ausführungsform wird das Tetracarbonsäuredianhydrid und das Di- bzw. Polyisocyanat in der Mischung im Molverhältnis 1:1 umgesetzt.

Mit den nachfolgenden Beispielen wird die Erfindung noch näher beschrieben.

Beispiel 1

In eine homogene Mischung bestehend aus 10,0 g feingemahlenem BTDA (Korngröße < 75µm), 2,27 g Diphenylmethan-4,4'-diisocyanat, 1,86 g Polymethylenpolyphenylenpolyisocyanat (Formel Va; m= 1(55%), 2(28%), 3 und 4(insgesamt 17%)) und 2,70 g eines Gemisches aus 20 Mol-% Diphenylmethan-4,4'-diisocyanat und 80 Mol-% Toluylendiisocyanat (2,4- und 2,6 Isomeres) wurde 0,1 g einer Mischung aus 20 Mol-% Triethylendiamin und 80 Mol-% Dimethylethanolamin als Reaktionsbeschleuniger eingerührt. Diese Reaktionsmischung wurde in eine vorgewärmte Stahlform gegossen, innerhalb von 5 Minuten auf 220°C erhitzt und weitere 5 Minuten bei dieser Temperatur gehalten. Es entstand ein fester Schaum, der der Stahlform entnommen wurde.

Die Dichte des erhaltenen Polyimidschaumes wurde nach ASTM D1622 bestimmt und betrug 9,74 ± 0,5 $kg/m^3$.

LOI-Wert (Limiting Oxygen Index): 40%;

Thermogravimetrische Analyse (Aufheizrate 20°C/min):

Gewichtsverlust bis 150°C: 1,13%

Gewichtsverlust bis 350°C insgesamt: 1,24%

maximaler Gewichtsverlust bei 600°C.

Beispiel 2

In eine homogene Mischung bestehend aus 10,7 g feingemahlenem BTDA (Korngröße < 75µm) und 6,35 g eines Gemisches aus 20 Mol-% Diphenylmethan-4,4'-diisocyanat und 80 Mol-% Toluylendiisocyanat (2,4- und 2,6 Isomeres) wurden 0,5 g einer Mischung aus 20 Mol-% Triethylendiamin und 80 Mol-% Dimethylethanolamin als Reaktionsbeschleuniger eingerührt. Diese Reaktionsmischung wurde in eine vorgewärmte Stahlform gegossen, innerhalb von 10 Minuten auf 250°C erhitzt und weitere 30 Minuten bei dieser Temperatur gehalten. Es entstand ein fester Schaum, der der Stahlform entnommen wurde.

Die Dichte des erhaltenen Polyimidschaumes wurde nach ASTM D1622 bestimmt und betrug 8,06 ± 0,2 $kg/m^3$.

LOI-Wert (Limiting Oxygen Index): 40%;

Thermogravimetrische Analyse (Aufheizrate 20°C/min):

Gewichtsverlust bis 150°C: 1,27%

Gewichtsverlust bis 350°C insgesamt: 2,88%

maximaler Gewichtsverlust bei 610°C.

Beispiel 3

In eine homogene Mischung bestehend aus 59,44 g feingemahlenem BTDA (Korngröße < 75µm), 13,6 g Diphenylmethan-4,4'-diisocyanat, 11,1 g Polymethylenpolyphenylenpolyisocyanat (Formel Va; m= 1(55%), 2(28%), 3 und 4(insgesamt 17%)) und 17,0 g Toluylendiisocyanat (2,4- und 2,6 Isomeres) wurden 0,6 g einer Mischung aus 20 Mol-% Triethylendiamin und 80 Mol-% Dimethylethanolamin als Reaktionsbeschleuniger und 0,15 g PolydimethyldisiloxanKopolymer als Netzmittel eingerührt. Diese Reaktionsmischung wurde in eine vorgewärmte Stahlform gegossen, innerhalb von 5 Minuten auf 250°C erhitzt und weitere 10 Minuten bei dieser Temperatur gehalten. Es entstand ein fester Schaum, der der Stahlform entnommen wurde.

Die Dichte des erhaltenen Polyimidschaumes wurde nach ASTM D1622 bestimmt und betrug 15,00 ± 0,5 $kg/m^3$.

LOI-Wert (Limiting Oxygen Index): 40%;

Thermogravimetrische Analyse (Aufheizrate 20°C/min):

Gewichtsverlust bis 150°C: 1,42%

Gewichtsverlust bis 350°C insgesamt: 1,89%

maximaler Gewichtsverlust bei 580°C.

## Patentansprüche

1. Schwerentflammbarer, hochtemperaturbeständiger Schaumstoff aus Polyimiden der allgemeinen Formel

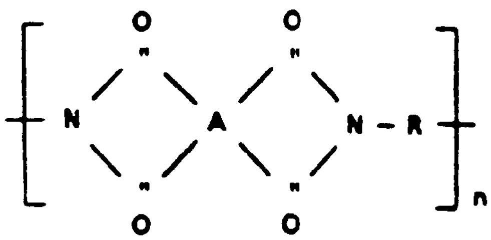 , (I)

worin n eine ganze Zahl größer als 1,
A eine vierbindige Gruppe der Formel

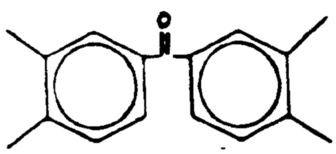 , (IIa) oder 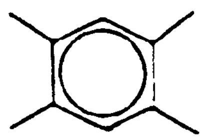 , (IIb) und

R mindestens eine der folgenden zweibindigen Gruppen der Formeln

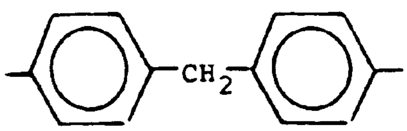 , (III), 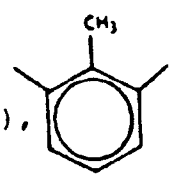 , (IVa), 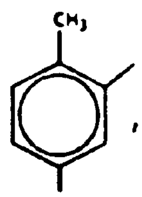 , (IVb),

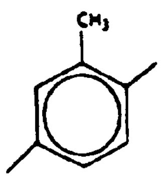 , (IVc), 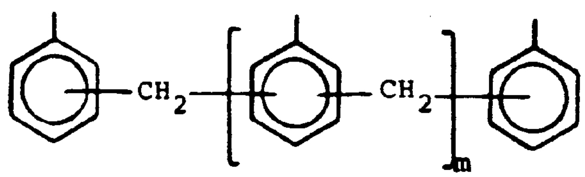 , (V),

worin m die Zahl 0, 1, 2, 3 oder 4 bedeutet, darstellen, welcher Schaumstoff einen bei einer thermogravimetrischen Analyse mit einer Aufheizgeschwindigkeit von 20 Grad pro Minute feststellbaren maximalen Gewichtsverlust zwischen 550 und 650°C, insbesondere zwischen 580 und 650°C, aufweist, wobei ein Gewichtsverlust bis zu einer Aufheiztemperatur von 350°C insgesamt weniger als 3 % Masse beträgt.

**2.** Verfahren zur Herstellung eines Schaumstoffes aus Polyimiden nach Anspruch 1 durch Umsetzen von Benzophenon-3,3',4,4'-tetracarbonsäuredianhydrid oder Pyromellithsäuredianhydrid mit mindestens einem Di- oder Polyisocyanat, ausgewählt aus der Gruppe Methylendiphenyl-4,4'-diisocyanat, 2,4-,2,5-,2,6-Toluylendiisocyanat oder Polymethylenpolyphenylenpolyisocyanat der Formel

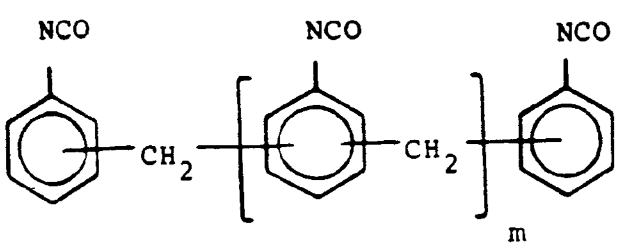 , (Va)

in Gegenwart eines Reaktionsbeschleunigers, wobei das Tetracarbonsäuredianhydrid, das Di- oder Polyisocyanat und der Reaktionsbeschleuniger bei Raumtemperatur homogen vermischt werden, worauf die Mischung auf eine Temperatur zwischen 200 und 250°C erhitzt und mindestens 5 Minuten in diesem Temperaturbereich gehalten wird.

**3.** Verfahren nach Anspruch 2, dadurch gekennzeichnet, daß als Reaktionsbeschleuniger ein Gemisch aus tertiären Aminen, vorzugsweise Triäthylendiamin und Dimethyläthanolamin, eingesetzt wird.

**4.** Verfahren nach Anspruch 3, dadurch gekennzeichnet, daß der Reaktionsbeschleuniger in einer Menge zwischen 0,1 und 5% Masse, bezogen auf das Tetracarbonsäuredianhydrid, eingesetzt wird.

**5.** Verfahren nach einem oder mehreren der Ansprüche 2 bis 4, dadurch gekennzeichnet, daß es in Gegenwart eines oberflächenaktiven Stoffes, vorzugsweise auf Silikonbasis, durchgeführt wird.

**6.** Verfahren nach Anspruch 2, dadurch gekennzeichnet, daß das Tetracarbonsäuredianhydrid und das Di- oder Polyisocyanat in der Mischung im Molverhältnis 1:1 vorliegen.

Europäisches Patentamt

# EUROPÄISCHER RECHERCHENBERICHT

Nummer der Anmeldung

EP 91 89 0140

EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 263 410 (C.-Y.M. TUNG et al.)<br>* Ansprüche * | 1 | C 08 G 73/10<br>C 08 J 9/02 //<br>(C 08 J 9/02<br>C 08 L 79:08 ) |
| A | --- | 2-6 | |
| X | US-A-4 184 021 (R.A. FROSCH et al.)<br>* Ansprüche * | 1 | |
| A | --- | 2,6 | |
| X | DATABASE WPIL, Accession Nr, 84-316364 [51], Derwent Publications Ltd, London, GB; JP-A-59 199 727 (SEKISUI CHEMI.)<br>--- | 1 | |
| A | IDEM<br>----- | 2,6 | |

| RECHERCHIERTE SACHGEBIETE (Int. Cl.5) |
|---|
| C 08 G 73<br>C 08 J |

Der vorliegende Recherchenbericht wurde für alle Patentansprüche erstellt

| Recherchenort | Abschlußdatum der Recherche | Prüfer |
|---|---|---|
| DEN HAAG | 26-09-1991 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)